# EUROPÄISCHE PATENTSCHRIFT

(11) **EP 3 081 533 B1**
(45) Veröffentlichungstag und Bekanntmachung des Hinweises auf die Patenterteilung: **25.07.2018**
(21) Anmeldenummer: 16159392.6
(22) Anmeldetag: 09.03.2016
(51) Int. Cl.: C02F 1/24, C02F 1/38, B01D 53/50, B01D 53/64, B01D 53/80, C02F 101/20, C02F 103/18

(54) **VERFAHREN ZUR QUECKSILBERABTRENNUNG AUS WÄSCHERSUSPENSIONEN**
METHOD FOR SEPARATION OF MERCURY FROM WASHER SUSPENSIONS
PROCEDE DE SEPARATION DE MERCURE A PARTIR DE SUSPENSIONS CIRCULANT DANS UN LAVEUR

(30) Priorität: 15.04.2015 AT 502982015
(43) Veröffentlichungstag der Anmeldung: 19.10.2016
(73) Patentinhaber: Andritz AG, 8045 Graz (AT)
(72) Erfinder: KRAMER, Michael, 8020 Graz (AT); REISSNER, Harald, 8076 Vasoldsberg (AT)
(74) Vertreter: Tschinder, Thomas

(56) Entgegenhaltungen:
- EP-A1- 2 033 702
- AT-A1- 512 479
- DE-A1-102011 105 292
- US-A- 5 500 197

## Beschreibung

Den Gegenstand dieser Erfindung bildet ein Verfahren zur Entfernung von Quecksilber bei der Rauchgasentschwefelung. Dabei wird die im Wäscher anfallende Gipssuspension, die auch das Quecksilber enthält, mittels zumindest eines Gipszyklons (Hydrozyklon) eingedickt und die eingedickte Gipssuspension über den Unterlauf des Hydrozyklons abgeführt. Der Oberlauf des Hydrozyklons wird zumindest einem Abwasserzyklon zur Feststoffrückgewinnung zugeführt und der Oberlauf des Abwasserzyklons wird anschließend in einer Abwasserreinigungsanlage behandelt bzw. gereinigt.

Die nasse Rauchgasentschwefelung ist ein Verfahren zur Entfernung von Schwefelverbindungen aus den Abgasen von z.B. Kraftwerken, Müllverbrennungsanlagen oder Großmotoren. Die Schwefelverbindungen entstehen dabei durch das Verbrennen schwefelhaltiger zumeist fossiler Brennstoffe. Die Anlagen zur Rauchgasentschwefelung werden mit REA (Rauchgasentschwefelungsanlage) abgekürzt. Eine Rauchgasentschwefelungsanlage kann auch für die Gewinnung von Gips (REA-Gips) genutzt werden. Diese Art der Gipsgewinnung ist bereits seit langem Stand der Technik.

Die bei der Entschwefelung zur Anwendung gebrachte Waschsuspension (Gipssuspension) wird nach heutigem Stand der Technik in der Regel mittels Hydrozyklonen eingedickt und anschließend via Bandfilter oder Zentrifuge auf den Endtrockengehalt gebracht. Üblicherweise werden an die Gipsqualität Anforderungen bezüglich Reinheitsgrad gestellt. Die DE 10 2011 105 292 A1 beschreibt eine Fremdstoffausschleusung aus einem Rauchgasentschwefelungsprozess mit mehreren Hydrozyklonen bei dem die Partikelgrößenverteilung in der Gipssuspension gemessen und zur Einstellung des Oberlaufs zumindest eines Hydrozyklons verwendet wird. Zusätzlich zur Entschwefelung im Nasswäscher erfolgt eine Abscheidung von im Rauchgas enthaltenen Quecksilber-Halogenverbindungen
Bei der Abscheidung von Quecksilber aus Verbrennungsabgasen, insbesondere bei der Verstromung von Kohle, ist man mit der Problematik der Re-emission des bereits abgeschiedenen Quecksilbers aus dem Nasswäscher konfrontiert.

Oxidierte Quecksilberspezies (der Form HgX₂, X=Cl, Br, I) verhalten sich wasserlöslich, und sind demnach mit den übrigen sauren Abgasbestandteilen gut aus dem Rauchgas abscheidbar. Je nach Wäscher-Chemie liegt das ins Waschwasser eingebundene Quecksilber gelöst (aber in der Regel nicht dissoziiert) vor, alternativ ist auch eine Komplexierung mittels Halogensalzen bzw. eine adsorptive Bindung an insbesondere C-haltigen Feinstoffen möglich. Gelöstes (oxidiertes) Quecksilber kann durch den gegebenen Eigendampfdruck reemittieren, alternativ ist eine reduktive Zerstörung der Verbindung möglich bei gleichzeitiger Freisetzung von elementarem (wasserunlöslichem) Quecksilber, welches in der Folge zur Gänze reemitiert.

Diesem Problem kann durch die Überführung der gelösten Hg-Spezies in eine adsorbierte Form begegnet werden. Möglichkeiten dazu bieten beispielsweise Adsorbentien auf Basis Aktivkohle, oder aber die Fällung der relevanten Störstoffe im Wäscherkreislauf (mit z.B. sulfidischen Fällungsmitteln).

Das adsorptiv gebundene Quecksilber findet sich bevorzugt auf einer feinpartikulären Fraktion, grobkörnige Feststoffe bleiben beinahe quecksilberfrei.

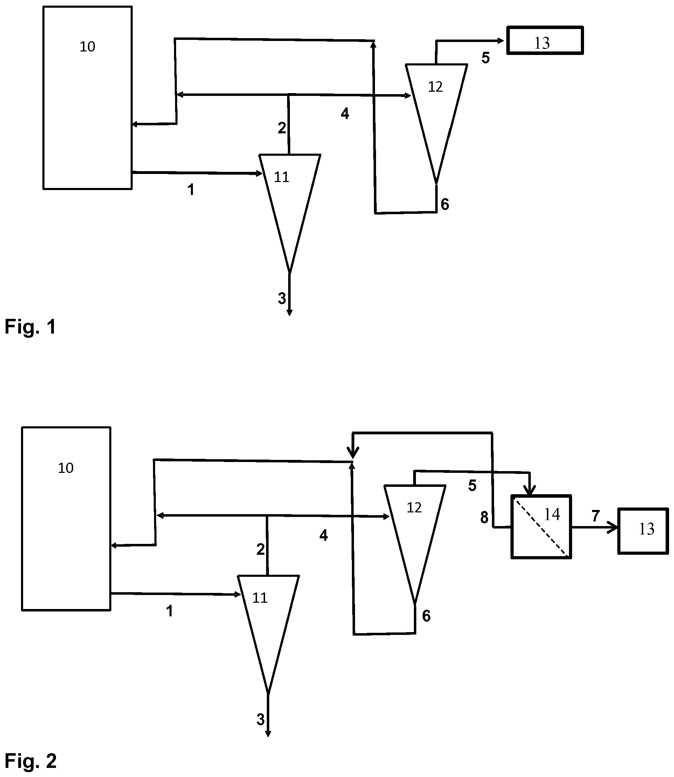

Heute im Bereich der Nass-REA übliche Gipsentwässerungssysteme (siehe Fig. 1) bestehen zumeist aus einem Gipszyklon 10, einem darauf folgenden Bandfilter (in Figur 1 nicht dargestellt) sowie einem Abwasserzyklon 12 zur Feststoffrückgewinnung vor der Abwasserreinigungsanlage (ARA) 13. Die dabei verwendeten Hydrozyklone zeichnen sich dadurch aus, dass sie Partikel mit hoher Sinkgeschwindigkeit im Unterlauf anreichern. Dabei gilt, dass alle Partikel mit einer Dichte über der des Fluids im Unterlauf angereichert werden, unabhängig von Ihrer Größe (kolloidale Systeme ausgenommen). Große Partikel werden beinahe zur Gänze abgeschieden, sehr kleine reichern sich nur geringfügig an.

Die Folge ist ein vermehrter Quecksilbereintrag in den Zyklonunterlauf und somit in das Produkt REA-Gips, weil sich auf der (ebenfalls angereicherten) Feinteilfraktion das Quecksilber befindet. Je nach Betriebszustand und Abwassermenge / Zyklontyp kann dabei bis zu 90% der Quecksilberfracht im Gips landen. Die volumenbezogenen Quecksilbergehalte im Oberlauf werden über die Zyklonstufe etwas reduziert. Das bedeutet, dass nach einer 2-stufigen Zyklonschaltung die ausgetragene Konzentration unter der im Wäscher zu liegen kommt.

Eine Verbesserung bringt der Einsatz der Waschwasserzyklontechnologie wie sie in der AT 512 479 B1 beschrieben ist. Dort findet mittels Zusatzwasserdosierung eine Abreicherung der Feinstoffe im Unterlauf statt.

Solche Systeme reduzieren die Quecksilberfracht in den Zyklonunterlauf um ∼ 20 - 30%. Allerdings bleibt trotzdem der Gips die Hauptsenke im Prozess. Der Zyklonoberlauf weist etwas höhere Quecksilbergehalte auf, als bei Verwendung eines konventionellen Zyklons.

An Aktualität gewinnt dieses Problem dadurch, dass vor dem Hintergrund der Quecksilber-Emissionsgrenzwerte-Diskussion mit einer massiven Grenzwertverschärfung zu rechnen ist. Unter Einbeziehung der in Europa dominierenden Anlagenschaltungen (Kessel-SCR-ESP-WFGD) ist davon auszugehen, dass die wirtschaftlichste Abscheidung im Wäscher stattfinden wird.

Eine denkbare Variante wäre eine 2-stufige Gipsentwässerung (Gipswäsche) mit Zwischenverdünnung durch Prozesswasser. Auf diese Art wäre ein hochreiner und beinahe Hg freier Gips denkbar, allerdings würde dann das Hg Inventar im Wäscher so lange ansteigen, bis die eingetragene Fracht (mittels Rauchgas) der durch den Abwasserstrom ausgetragenen entspricht. Dieser Zustand erfordert sehr hohe Hg Konzentrationen im Wäscher, die dann wiederum zu verstärkten Reemissionen ins Reingas neigen.

Das Problem liegt darin, dass die Abwassermenge in Kohlekraftwerken zumeist relativ klein ist. Bezogen auf den der Gipsvorentwässerung zugeführten Strom liegt die Abwassermenge in Bereichen <10 %, oft im Bereich zwischen 5 - 7%. Zur Sicherstellung einer hohen Quecksilberfracht in die Abwasserreinigungsanlage muss dementsprechend die Konzentration hoch liegen, was wiederum im Wäscher zu erhöhten Reemissionen führt.

Will man also den Hg Transfer in den Gips reduzieren, muss die Abwassermenge angehoben werden. Das bedeutet jedoch einen erhöhten Anlagenaufwand in der Abwasserreinigungsanlage.
Alternativ kann man durch eine modifizierte Gipsvorentwässerung (mittels Waschzyklon) den Hg Transfer in den REA Gips reduzieren. Ohne weiterführende Maßnahmen bedeutet das aber eine signifikante Hg-Erhöhung im Wäscher mit erhöhter Tendenz zur Reemission.

Der Erfindung liegt somit die Aufgabe zu Grunde, ein Verfahren bereitzustellen, mit der Quecksilber zuverlässig aus Rauchgasen abgeschieden werden kann, wobei sich jedoch die Quecksilberanreicherung im REA-Gips und die Größe der Abwasserreinigungsanlage in Grenzen halten sollten.

Gelöst wird diese Aufgabe durch ein Verfahren bei dem die volumenbezogene Quecksilberkonzentration erhöht wird und bei dem dieser aufkonzentrierte und eingedickte Abwasserstrom der Abwasserreinigungsanlage zugeführt wird.

Erfindungsgemäß befindet sich also eine Quecksilber-Aufkonzentrationsstufe vor dem Eintrag in die Abwasserreinigungsanlage (ARA). Dadurch wird einerseits eine hohe Hg Fracht der Abwasserreinigung zugeführt, bei gleichzeitig geringem Volumenstrom. Zusätzlich wird das Hg Niveau im Wäscher abgesenkt.
Wesentliches Kennzeichen dieses Verfahrens ist eine deutlich niedrigere Hg-Konzentration im Wäscher, im Vergleich zum Abwassserstrom.

Das bei der Aufkonzentrierung anfallende Filtrat (Akzept) kann anderweitig im Wäschersystem Verwendung finden. Der "Dickstoff" wird der ARA zugeführt.

Besonders effektiv ist die Technologie in Kombination mit einer Waschstufe für den REA Gips. Dies kann beispielsweise über einen Waschwasserzyklon oder über einen zweistufigen Zyklon mit Zwischenverdünnung erfolgen.

Eine Abreicherung des Feinstoffanteils im Unterlauf kann durch eine einfache Zwischenverdünnung innerhalb eines Zyklons erfolgen oder durch die Verdrängung der flüssigen Phase im Unterlauf durch gezielte Dosierung eines Waschwasserstromes. In der WO 2010/089309 A1 wird diesbezüglich von einer Gegenstromklassierung gesprochen. Die Zwischenverdünnung muss allerdings mit einem Fluidstrom erfolgen, der die Problemfraktion nicht beinhaltet.

Ein weiterer verwendbarer Waschwasserzyklon ist außerdem in der AT 512 479 B1 bzw. in der AT 511 837 B1 beschrieben. Dabei wird dem Hydrozyklon zusätzlich zur Gipssuspension über eine eigene Zuleitung Wasser zugeführt, sodass es dadurch zu einer Feinstoffabreicherung, bezogen auf das Suspensionsvolumen, im Unterlauf kommt.

Auf diese Art ist ein Austrag in die ARA von bis zu 90% des gesamten in den Wäscher eingetragenen Quecksilbers denkbar, gleichzeitig kann der Reinheitsgrad des REA Gipses in Bereiche des Naturgipses vordringen (∼ 0,1 mg/kg TS, stark abhängig vom Betriebszustand).

Als Aufkonzentrationsstufe sind alle verfahrenstechnischen Operationen denkbar, die eine Feststoffanreicherung erlauben (Zentrifugen, Sedimenter, Flotation, u.ä.).

Zusammenfassend geht es bei der Erfindung um eine kontrollierte Beeinflussung der Flüssigbilanz von Gipsentwässerungssystemen durch Ausschleusung eines eingedickten Abwasserstromes mit Feinststoffen, die Quecksilber beladene Aktivkohle oder gefällte Quecksilberverbindungen enthalten, um geringstmögliche Anlagengrößen im Bereich der Abwasserreinigungsstufe zu erreichen.

Im Folgenden wird das erfindungsgemäße Verfahren anhand einer Zeichnung beschrieben. Es zeigen:
Fig. 1 ein schematisches Verfahrensschema nach dem Stand der Technik;
Fig. 2 ein schematisches Verfahrensschema für ein Ausführungsbeispiel des erfindungsgemäßen Verfahren;
Gleiche Bezugszeichen in den beiden Zeichnungen bezeichnen jeweils die gleichen Bauteile oder Stoffströme.

Fig. 1 zeigt ein herkömmliches Verfahrensschema bei dem im Wäscher 10 einer Rauchgasentschwefelungsanlage eine Gipssuspension 1 anfällt, die auch Quecksilber enthält.
Die Gipssuspension 1 wird einem Gipszyklon (Hydrozyklon) 11 zugeführt und über den Unterlauf 3 wird die eingedickte Gipssuspension abgeführt. Der Oberlauf 2, in der Regel oft auch nur ein Teil 4 des Oberlaufs 2, wird einem Abwasserzyklon 12 zugeführt. Im Abwasserzyklon 12 werden über den Unterlauf 6 Feststoffe wie Gips oder Restkarbonat rückgewonnen und wieder dem Wäscher 10 zugeführt. Der Oberlauf 5 der Abwasserzyklons 12 wird einer Abwasserreinigungsanlage 13 zugeführt, in der das enthaltene Quecksilber vom restlichen Abwasser abgetrennt wird.

Figur 2 zeigt nun ein einfaches Ausführungsbeispiel für das erfindungsgemäße Verfahren. Hierbei wird der Oberlauf 5 des Abwasserzyklons 12 einem Konzentrator 14 zugeführt. Im Konzentrator 14 wird der Oberlauf 5 "eingedickt". Dabei werden die Feinststoffe, an denen auch das Quecksilber gebunden ist, angereichert und so die Quecksilberkonzentration erhöht, dieser aufkonzentrierte Abwasserstrom 7 wird dann der Abwasserreinigungsanlage 13 zugeführt.

Das Quecksilber liegt im Wesentlichen an einer Feinstofffraktion adsorptiv gebunden vor. Wenn man durch geeignete Prozessführung diese mit Quecksilber beladenen Feststoffe im Abwasserstrom anreichern kann, ist eine hohe Abwasserfracht möglich, bei gleichzeitig niedrigem Volumenstrom. Die ARA kann somit klein gehalten werden.

Beim Konzentrator 14 kann es sich beispielsweise um eine Zentrifuge, um einen Sedimenter, um eine Flotationsanlage oder ähnliches handeln.

Das Filtrat 8, also der von Quecksilber abgereicherte Stoffstrom, wird hier wieder dem Wäscher 10 zugeführt.

Es sind auch weitere Ausführungsbeispiele denkbar, bei denen beispielsweise der Hydrozyklon 11 als Waschzyklon ausgeführt ist oder bei der die Gipsentwässerung zweistufig mit Zwischenverdünnung erfolgt.

## Patentansprüche

1. Verfahren zur Entfernung von Quecksilber bei der Rauchgasentschwefelung, wobei eine Gipssuspension (1), die auch das Quecksilber enthält, im Wäscher (10) einer nassen Rauchgaswäsche anfällt und wobei die gipshaltige Suspension (1) mittels zumindest eines Hydrozyklons (11) eingedickt und die eingedickte Gipssuspension über den Unterlauf (3) des Hydrozyklons (11) abgeführt wird, wobei der Oberlauf (2, 4) des Hydrozyklons (11) zumindest einem Abwasserzyklon (12) zur Feststoffrückgewinnung zugeführt wird und der Oberlauf (5) des Abwasserzyklons (12) anschließend in einer Abwasserreinigungsanlage (13) behandelt wird, **dadurch gekennzeichnet, dass** der Oberlauf (5) des Abwasserzyklons (12) in einem Konzentrator (14) eingedickt wird, wobei Feinstoffe an denen das Quecksilber gebunden ist, angereichert werden und so die Quecksilberkonzentration erhöht wird und dass dieser aufkonzentrierte Abwasserstrom (7) der Abwasserreinigungsanlage (13) zugeführt wird.

2. Verfahren nach Anspruch 1, **dadurch gekennzeichnet, dass** das bei der Aufkonzentrierung anfallende Filtrat(8) wieder dem Wäscher (10) zugeführt wird.

3. Verfahren nach Anspruch 1 oder 2, **dadurch gekennzeichnet, dass** dem Hydrozyklon (11) zusätzlich zur Gipssuspension (1) über eine eigene Zuleitung Wasser zugeführt wird, sodass es dadurch zu einer Feinstoffabreicherung, bezogen auf das Suspensionsvolumen, im Unterlauf (3) kommt.

4. Verfahren nach Anspruch 1 oder 2, **dadurch gekennzeichnet, dass** zur Gipswäsche eine zweistufige Gipsentwässerung mit Zwischenverdünnung durch Prozesswasser durchgeführt wird.

5. Verfahren nach einem der Ansprüche 1 bis 4, **dadurch gekennzeichnet, dass** die Aufkonzentrierung des Oberlaufs (5) mit einer Zentrifuge, einem Sedimenter oder mittels Flotation durchgeführt wird.

## Claims

1. Method for removing mercury in flue gas desulfurization, where a gypsum suspension (1) that also contains the mercury is produced in the scrubber (10) of a wet flue gas scrubbing plant, and where the gypsum-containing suspension (1) is thickened by means of at least one hydrocyclone (11) and the thickened gypsum suspension is discharged via the underflow (3) from the hydrocyclone (11), where the overflow (2, 4) from the hydrocyclone (11) is fed to at least one waste water cyclone (12) to recover the solids and the overflow (5) from the waste water cyclone (12) is then treated subsequently in a waste water treatment plant (13), **characterized in that** the overflow (5) from the waste water cyclone (12) is thickened in a concentrator (14), where fines to which the mercury is bound are concentrated and the mercury concentration is increased in this way, and **in that** this concentrated waste water flow (7) is fed to the waste water treatment plant (13).

2. Method according to Claim 1, **characterized in that** the accept (8) produced during concentration is fed to the scrubber (10) again.

3. Method according to Claim 1 or 2, **characterized in that** water is fed to the hydrocyclone (11) through a dedicated feed pipe in addition to the gypsum suspension (1), thus resulting in fine material depletion in the underflow (3) in relation to the suspension volume.

4. Method according to Claim 1 or 2, **characterized in that** the gypsum is washed in two-stage gypsum dewatering with intermediate dilution using process water.

5. Method according to one of Claims 1 to 4, **characterized in that** the concentration of the overflow (5) is increased by means of a centrifuge, a sedimenter, or by flotation.

## Revendications

1. Procédé d'élimination du mercure lors de la désulfuration, une suspension (1) de gypse, qui contient également le mercure, s'accumulant dans le laveur (10) d'un lavage des fumées par voie humide et la suspension (1) contenant le gypse s'épaississant au moyen d'au moins un hydrocyclone (11) et la suspension de gypse épaissie étant évacuée par la sousverse (3) de l'hydrocyclone (11), un cyclone d'eaux résiduaires (12) étant au moins acheminé jusqu'à la surverse (2, 4) de l'hydrocyclone (11) pour la récupération de matière solide et la surverse (5) du cyclone d'eaux résiduaires (12) étant traitée ensuite dans une station d'épuration des eaux résiduaires (13), **caractérisé en ce que** la surverse (5) de l'hydrocyclone (12) s'épaissit dans un concentrateur (14), les fines sur lesquelles est collé le mercure, étant enrichies et augmentant ainsi la concentration en mercure et **en ce que** ce flux d'eaux résiduaires épaissi (7) étant acheminé jusqu'à la station d'épuration des eaux résiduaires (13).

2. Procédé selon la revendication 1, **caractérisé en ce que** le filtrat (8) accumulé lors de la concentration est à nouveau acheminé jusqu'au laveur (10).

3. Procédé selon la revendication 1 ou 2, **caractérisé en ce que** de l'eau est acheminée en plus jusqu'à l'hydrocyclone (11) par une conduite séparée pour la suspension de gypse (1) de manière à appauvrir les fines dans la sousverse (3) par rapport au volume de la suspension.

4. Procédé selon la revendication 1 ou 2, **caractérisé en ce que** pour le lavage du gypse, on procède à une déshydratation du gypse en deux étapes au moyen d'une dilution intermédiaire par l'eau de traitement.

5. Procédé selon l'une quelconque des revendications 1 à 4, **caractérisé en ce que** la concentration de la surverse (5) est réalisée à l'aide d'une centrifugeuse, d'un sédimenteur ou par flotation.
